# EUROPEAN PATENT APPLICATION

(11) **EP 2 592 875 A1**
(43) Date of publication of application: **15.05.2013**
(21) Application number: 12190046.8
(22) Date of filing: 25.10.2012
(51) Int. Cl.: H04W 48/20, H04W 84/12, H04W 48/12

(54) **Method and apparatus to select an access point**

(30) Priority: 10.11.2011 KR 20110117165
(71) Applicant: Samsung Electronics Co., Ltd, Gyeonggi-do 443-742 (KR)
(72) Inventor: Yang, Chee-hwan, Gyeonggi-do (KR)
(74) Representative: Hewett, Jonathan Michael Richard

(57) **Abstract**

A method and apparatus of selecting at least one access point (AP) enable a user terminal to wirelessly communicate efficiently. The method includes sensing a plurality of APs connectible to the user terminal, measuring a network access speed indicating a speed of transmitting and receiving data between the user terminal and an external device over a network with respect to each of the plurality of APs, and selecting the at least one AP based on the measured network access speed.

## Description

The present invention relates to a method and apparatus to select an access point (AP), and more particularly, to a method and apparatus to select at least one AP from among a plurality of APs.

Recently, as wireless Internet has been applied to communication devices such as cellular phones, methods of enhancing performance of wireless networks have been proposed.

Wireless communication devices are necessarily connected to access points (AP) for network connectivity. If wireless communication devices are connectible to a plurality of APs, it is necessary to select an AP for efficient data communication.

The present invention provides a method and apparatus to select at least one access point (AP) from among a plurality of APs based on a network access speed, thereby enhancing a speed of a wireless network.

Additional features and advantages of the present invention will be set forth in part in the description which follows and, in part, will be obvious from the description, and/or may be learned by practice of the invention.

According to feature of the present invention, a method of selecting at least one access point (AP) enables a user terminal to wirelessly communicate, the method including: sensing a plurality of APs connectible to the user terminal; measuring a network access speed indicating a speed of transmitting and receiving data between the user terminal and an external device over the network with respect to each of the plurality of APs; and selecting the at least one AP based on the measured network access speed.

The measuring of the network access speed may include: classifying the sensed plurality of APs according to identifiers (IDs) of the sensed plurality of APs; selecting one of the IDs by a user; and if multiple APs correspond to the selected ID, measuring the network access speed of each of the APs corresponding to the selected ID.

The selecting the at least one AP may include: selecting an AP having a fastest network access speed.

The measuring of the network access speed may include: transmitting a speed measurement packet to a previously set server through each of the plurality of APs and measuring the network access speed based on a response of the previously set server.

The measuring of the network access speed may include: giving access to a previously set web page through each of the plurality of APs and measuring the network access speed.

The method may further include: if an AP having a network access speed faster than a previously set network access speed is sensed from among the plurality of APs, stopping measuring network access speeds of the other APs.

The method may further include: setting an AP of which a network access speed is to be measured first from among the plurality of APs.

The method may further include: storing a Media Access Control (MAC) address of the selected at least one AP, wherein the setting of the AP includes: setting a network access speed of an AP corresponding to the stored MAC address to be measured first.

The setting of the AP may include: setting a network access speed of an AP having a highest signal intensity to be measured first from among the plurality of APs.

The sensing of the plurality of APs may include: sensing the plurality of APs based on beacons received by the user terminal.

According to another feature of the present invention, an apparatus to select at least one AP enables a user terminal to wirelessly communicate, the apparatus including: a sensing module to sense a plurality of APs connectible to the user terminal; a speed measuring module to measure a network access speed indicating a speed of transmitting and receiving data between the user terminal and an external device over a network with respect to each of the plurality of APs; and a control module to select the at least one AP based on the measured network access speed.

The sensing module may classify the sensed plurality of APs according to IDs of the sensed plurality of APs, wherein the speed measuring module, if multiple APs correspond to an ID selected by a user, measures the network access speed of each of the APs corresponding to the selected ID.

The control module may select an AP having a fastest network access speed.

The speed measuring module may transmit a speed measurement packet to a previously set server through each of the plurality of APs and measure the network access speed based on a response of the previously set server.

The speed measuring module may give access to a previously set web page through each of the plurality of APs and measure the network access speed.

The speed measuring module, when an AP having a network access speed faster than a previously set network access speed is sensed from among the plurality of APs, may stop measuring network access speeds of the other APs.

The apparatus may further include: a setting module to set an AP of which network access speed is to be measured first from among the plurality of APs.

The apparatus may further include: a memory module to store a MAC address of the selected at least one AP, wherein the setting module sets a network access speed of an AP corresponding to the MAC address stored in the memory module to be measured first.

The setting module may set a network access speed of an AP having a highest signal intensity to be measured first from among the plurality of APs.

The sensing module may sense the plurality of APs based on beacons received by the user terminal.

The foregoing and/or other features and utilities of the invention may also be achieved by providing an apparatus to select at least one access point (AP) to enable a user terminal to wirelessly communicate in an efficient manner, wherein the apparatus includes an AP communication module and a control module. The AP communication module may sense a plurality of APs to connect to the user terminal and measure a network access speed to transmit and receive data between the user terminal and an external device over a network with respect to each of the plurality of APs. The control module may select at least one AP having a greatest network access speed of the plurality of APs.

The AP communication module may include a sensing module and a speed measuring module. The sensing module may sense the plurality of APs that are connectible to the user terminal. In addition, the speed measuring module may measure the network access speed to transmit and receive between the user terminal and the external device over the network, with respect to each of the plurality of APs.

The foregoing and/or other features and utilities of the invention may also be achieved by providing an apparatus that senses a plurality of user terminal-connectible access points (APs) to select at least one access point (AP) to facilitate wireless communication of a user terminal. The apparatus may include a sensing module and a control module. The sensing module may sense the plurality of user terminal-connectible access points. The control module may measure network access speed to transmit and receive data between a user terminal and an external device over a network, with respect to each of the plurality of APs and to select at least one AP of the plurality of user terminal-connectible access points, the at least one AP having a greatest network access speed of the plurality of user terminal-connectible access points.

The control module of the apparatus may include a processor to measure network access speed to transmit and receive data between a user terminal and an external device over a network, with respect to each of the plurality of APs and to select at least one AP of the plurality of user terminal-connectible access points, the at least one AP having a greatest network access speed of the plurality of user terminal-connectible access points.

According to another feature of the present invention, a computer readable recording medium having recorded thereon a computer program to execute the method of selecting at least one AP may be provided.

According to another feature of the present invention, a wireless LAN card including the apparatus to select at least one AP may be provided.

These and/or other features and utilities of the present invention will become apparent and more readily appreciated from the following description of the exemplary embodiments, taken in conjunction with the accompanying drawings of which:
FIG. 1 is a diagram illustrating wireless communication between a user terminal and one of a plurality of access points (APs);
FIG. 2A is a diagram of identifiers (IDs) of APs connectible to a user terminal;
FIG. 2B is a table of APs corresponding to ID "visitors";
FIG. 3 is a block diagram of an apparatus to select an AP according to an exemplary embodiment of the present invention;
FIG. 4A is a block diagram of an apparatus to select an AP according to another exemplary embodiment of the present invention;
FIG. 4B is a block diagram of an apparatus to select an AP according to another exemplary embodiment of the present inventionFIG. 5 is a flowchart of a method of selecting an AP according to an exemplary embodiment of the present invention;
FIG. 6 is a flowchart of a method of selecting an AP according to another exemplary embodiment of the present invention;
FIG. 7 is a block diagram of an apparatus to select at least one access point (AP) to enable a user terminal to wirelessly communicate in an efficient manner according to another exemplary embodiment of the present invention; and
FIG. 8 is a block diagram of an apparatus that senses a plurality of user terminal-connectible access points (APs) to select at least one access point (AP) to facilitate wireless communication of a user terminal.

Reference will now be made in detail to the embodiments of the present invention, examples of which are illustrated in the accompanying drawings, wherein like reference numerals refer to the like elements throughout. The exemplary embodiments are described below to explain the present invention while referring to the figures.

The term "module" in the embodiments of the present present invention means a software component and/or hardware components such as a field-programmable gate array (FPGA) and/or an application-specific integrated circuit (ASIC), and performs a specific function. However, the term "module" is not limited to software and/or hardware. The "module" may be formed to be in an addressable storage medium, and/or may be formed to operate one or more processors. Thus, for example, the term "module" may refer to components such as software components, object-oriented software components, class components, and task components, processes, functions, properties, procedures, sub-routines, segments of program codes, drivers, firmware, micro codes, circuits, data, data base, data structures, tables, arrays, and parameters. Functions provided by the elements and "modules" may be combined with a lesser number of elements and "modules" and/or may be separated into additional elements and "modules".

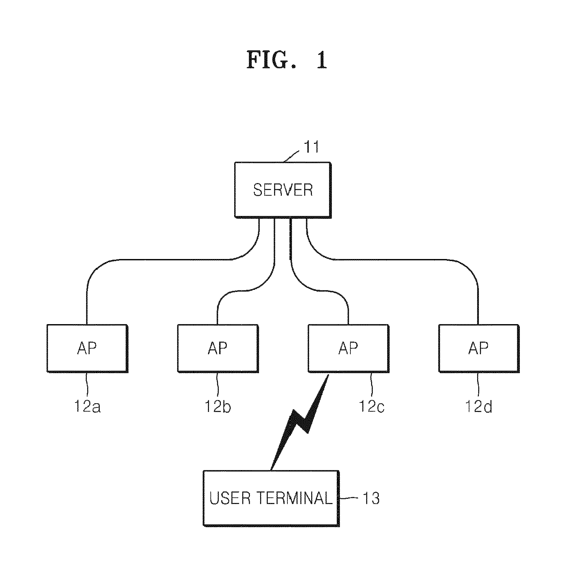

FIG. 1 is a diagram to illustrate wireless communication between a user terminal 13 and an access point (AP) 12c of a plurality of APs 12a, 12b, 12c, and 12d.

Referring to FIG. 1, the user terminal 13 includes a device connectible to a wireless network such as a computer, a notebook, a PDA, etc.

The user terminal 13 is connected to the AP 12c of the APs 12a, 12b, 12c, and 12d neighboring thereto and performs data communication with a server 11 located outside the APs.

Since a communication speed varies greatly according to an AP used to perform data communication, it is desirable to select an optimal AP from among the APs 12a, 12b, 12c, and 12d.

The optimal AP from among the APs 12a, 12b, 12c, and 12d may be selected based on an intensity of a signal received from each of the APs 12a, 12b, 12c, and 12d.

However, if an AP having a highest intensity of a signal is selected, a speed of the wireless network communication is not always maximized. If many users provide access to a corresponding AP, since a data amount transmitted to users is distributed, a network speed may be reduced when providing access to the AP having the highest intensity rather than providing access to an AP having a weak intensity.

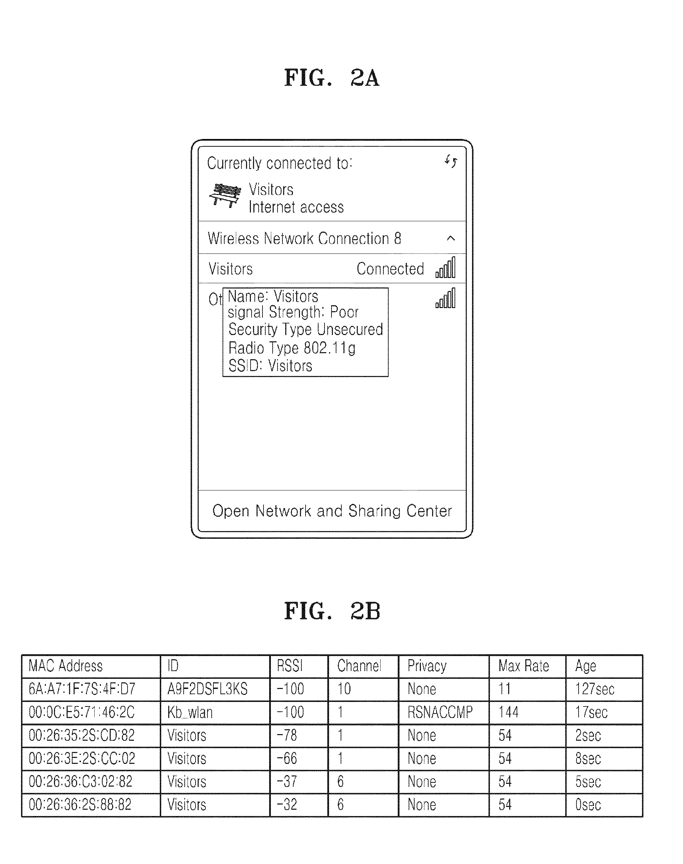

FIG. 2A is a diagram of identifiers (IDs) of APs connectible to a user terminal. FIG. 2B is a table of APs corresponding to ID "visitors".

The user terminal classifies a plurality of APs neighboring thereto according to IDs of the APs and displays the IDs to a user. Referring to FIG. 2A, the ID "Visitors" is displayed on the user terminal.

If the APs are classified into IDs, some of the APs may correspond to the same ID. In this case, the user may not determine whether the same ID corresponds to plural APs. Referring to FIG. 2B, although the APs correspond to the same ID "Visitors", plural APs may correspond to different MAC addresses. Thus, if the user selects an ID, the user terminal selects one of APs corresponding to the ID selected by the user.

The apparatus and method to select an AP according to an exemplary embodiment of the present invention may use an actual network speed as a reference to select one of a plurality of APs.

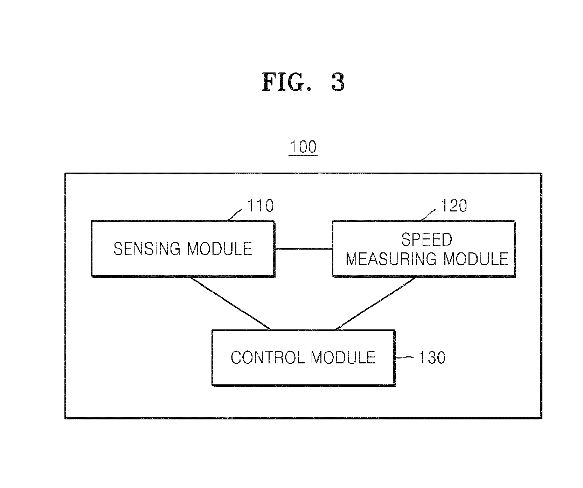

FIG. 3 is a block diagram of an apparatus 100 to select an AP according to an exemplary embodiment of the present invention. The apparatus 100 to select the AP according to at least one exemplary embodiment may be included, for example, in a wireless LAN card of a user terminal.

Referring to FIG. 3, the apparatus 100 to select the AP according to at least one exemplary present embodiment includes a sensing module 110, a speed measuring module 120, and a control module 130.

The sensing module 110 of the apparatus 100 to select the AP according to at least one exemplary embodiment may include an antenna and/or a communication module of a user terminal. The speed measuring module 120 and the control module 130 of the apparatus 100 to select the AP according to at least one exemplary embodiment and may each include a processor. It may be appreciated, however, that a single processor for controlling both the speed measuring module 120 and the control module 130 may be used.

The sensing module 110 senses a plurality of APs connectible to the user terminal. The operation of measuring the speed is described in greater detail below.

Each among the plurality of APs broadcasts beacons to the sensing module 110. The sensing module 110 may sense the plurality of APs based on the received beacons.

The speed measuring module 120 measures a network access speed of each of the plurality of APs sensed by the user terminal.

The network access speed means a speed of transmitting and receiving data between the apparatus 100 and an external device over the network. The external device includes, but is not limited to, a server and/or an external terminal. That is, the apparatus 100 to select the AP according to at least one exemplary embodiment measures a speed of transmitting and receiving actual data between the apparatus 100 and an external device with respect to each of the plurality of APs, and selects an optimal AP based on the measured speed.

If one of the plurality of APs has a network access speed faster, i.e., greater, than a previously set network access speed, the speed measuring module 120 may stop measuring network access speeds of the other APs. Accordingly, a time taken to measure the network access speed may be reduced.

The control module 130 selects at least one of the plurality of APs based on the network access speed measured by the speed measuring module 120. The control module 130 may select an AP having the fastest network access speed measured by the speed measuring module 120.

The sensing module 110 classifies the sensed plurality of APs as according to IDs. The sensing module 110 may allow IDs of the plurality of APs to be displayed to the user through a display of the user terminal.

The beacons broadcasted by the plurality of APs may include the IDs of the plurality of APs. The sensing module 110 may classify the plurality of APs according to the IDs included in the beacons.

If the user selects one of the IDs of the plurality of APs, the ID selected by the user may correspond to plural APs. In this case, the speed measuring module 120 may measure the network access speed of each of APs corresponding to the ID selected by the user. The control module 130 may select at least one of the plurality of APs based on the network access speed measured by the speed measuring module 120.

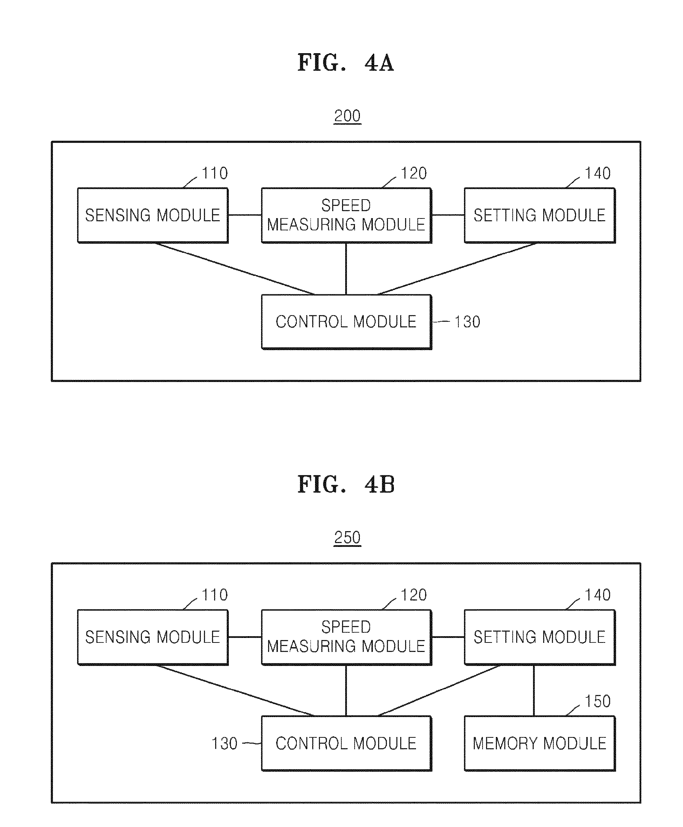

FIG. 4A is a block diagram of an apparatus 200 to select an AP according to an exemplary embodiment of the present invention. FIG. 4B is a block diagram of an apparatus 250 to select an AP according to another exemplary embodiment of the present invention.

The sensing module 110, the speed measuring module 120, and the control module 130 of FIGS. 4A and 4B have the same technical structure as those of the sensing module 110, the speed measuring module 120, and the control module 130 of FIG. 3, and thus detailed descriptions thereof will not be provided here.

Referring to FIG. 4A, the apparatus 200 to select the AP according to at least one exemplary embodiment may further include a setting module 140.

The setting module 140 sets an AP of which the network access speed is to be measured first among a plurality of APs. Information about the AP of which network access speed is to be measured first among the plurality of APs may be set by a user and/or may be automatically set by the control module 130.

Performing setup of the apparatus may require a significant amount of time if the speed measuring module 120 measures a network access speed of each of all APs sensed by the sensing module 110. Thus, the setting module 140 may set the AP of which network access speed is to be measured first among the plurality of APs, thereby reducing the time taken to measure the network access speed.

Referring to FIG. 4B, the apparatus 250 to select the AP according to at least one exemplary embodiment may further include a memory module 150.

The memory module 150 functions to store data. The memory module 150 may be, for example, a module capable of inputting and outputting information such as a hard disk, a flash memory, a compact flash (CF) card, a secure digital (SD) card, a smart media (SM) card, a multimedia card (MMC) and/or a memory stick.

The memory module 150 stores a MAC address of at least one AP previously selected by the control module 130. Since APs corresponding to the same ID include different MAC addresses, APs may be individually identified by MAC addresses thereof.

The setting module 140 may set a network access speed of the AP corresponding to the MAC address stored in the memory module 150 to be measured first since the network access speed of the AP previously selected by the control module 130 is predicted to be rapid. If a reference network access speed is previously set in the control module 130, since it is highly likely that the network access speed of the AP previously selected by the control module 130 is greater than the previously set reference network access speed, the number of APs of which network access speed is to be measured may be reduced.

Further, the setting module 140 may set a network access speed of an AP having the highest signal intensity to be measured first among the plurality of APs sensed by the sensing module 110 since a network access speed of an AP having a high signal intensity is predicted to be rapid. If a reference network access speed is previously set in the control module 130, since it is highly likely that the network access speed of the AP having the high signal intensity is greater than the previously set reference network access speed, the number of APs of which network access speed is to be measured may be reduced.

A method of measuring the network access point of each of the plurality of APs sensed by the sensing module 110 by using the speed measuring module 120 will now be described below.

The speed measuring module 120 may transmit a speed measurement packet to a previously set server through each of the plurality of APs, and measure the network access speed each of the plurality of APs based on a response of a corresponding server. The speed measuring module 120 may measure the network access speed in view of a time taken to transmit the speed measurement packet to the previously set server to receive the response of the corresponding server.

Further, the speed measuring module 120 may provide access to a previously set web page through each of the plurality of APs, and measure the network access speed of each of the plurality of APs. The web page may be used to provide a tool to measure the network access speed.

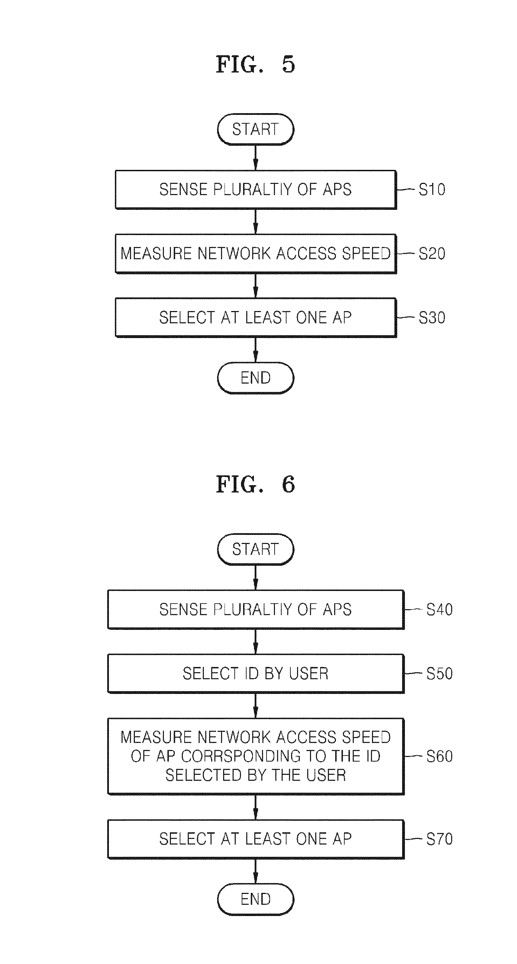

FIG. 5 is a flowchart of a method of selecting an AP according to an exemplary embodiment of the present invention. Referring to FIG. 5, the method of selecting an AP according to at least one exemplary embodiment includes operation times that are sequentially processed by the apparatuses 100, 200 and 250 to select the AP of FIGS. 3, 4A, and 4B. Thus, although omitted below, the descriptions of the apparatuses 100, 200 and 250 to select the AP of FIGS. 3, 4A, and 4B may also be applied to the method of selecting the AP of FIG. 5.

In operation S10, the sensing module 110 senses a plurality of APs connectible to a user terminal. The sensing module 110 may sense the plurality of APs based on received beacons, which are transmitted by each AP.

In operation S20, the speed measuring module 120 measures a network access speed of each of the plurality of APs sensed by the sensing module 110.

In operation S30, the control module 130 selects at least one of the plurality of APs based on the measured network access speeds.

FIG. 6 is a flowchart of a method of selecting the AP according to another exemplary embodiment of the present invention.

Referring to FIG. 6, in operation S40, the sensing module 110 senses a plurality of APs connectible to a user terminal. The sensing module 110 may sense the plurality of APs based on received beacons transmitted from each AP, as discussed above.

The sensing module 110 may classify the sensed plurality of APs according to IDs of the APs. In operation S50, one of the IDs may be selected by a user.

In operation S60, if a plurality of APs correspond to the ID selected by the user, the speed measuring module 120 measures a network access speed of each of the corresponding APs.

In operation S70, the control module 130 selects at least one of the plurality of APs based on the measured network access speeds.

As described above, the apparatus and method to select an AP according to the present invention may select one of a plurality of APs based on a network access speed of the APs, thereby enhancing a speed of a wireless network.

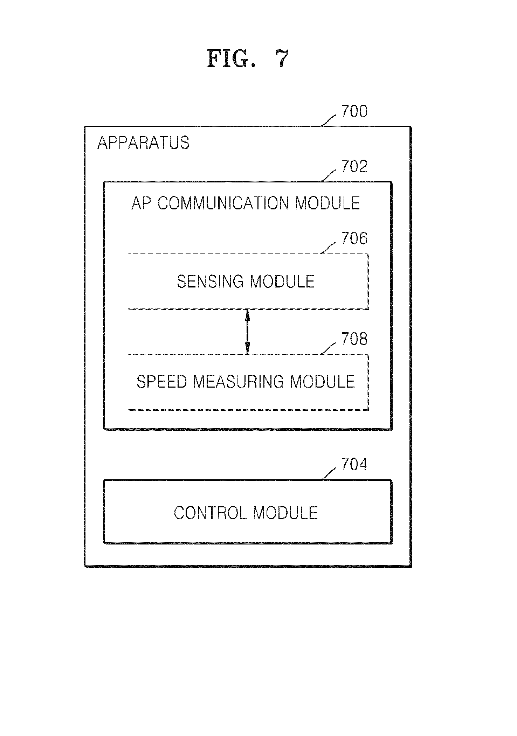

As illustrated in FIG. 7, the foregoing and/or other features and utilities of the invention may also be achieved by providing an apparatus 700 to select at least one access point (AP) to enable a user terminal to wirelessly communicate in an efficient manner, wherein the apparatus 700 includes an AP communication module 702 and a control module 704. The AP communication module 702 may sense a plurality of APs to connect to the user terminal and measure a network access speed to transmit and receive data between the user terminal and an external device over a network with respect to each of the plurality of APs. Accordingly, the control module 702 may select at least one AP having a greatest network access speed of the plurality of APs.

The AP communication module 702 may include a sensing module 706 and a speed measuring module 708. The sensing module 706 may sense the plurality of APs that are connectible to the user terminal. In addition, the speed measuring module 708 may measure the network access speed to transmit and receive between the user terminal and the external device over the network, with respect to each of the plurality of APs.

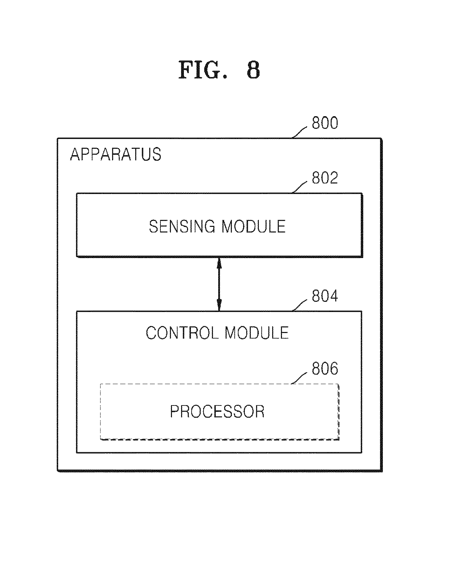

As illustrated in FIG. 8, the foregoing and/or other features and utilities of the invention may also be achieved by providing an apparatus 800 that senses a plurality of user terminal-connectible access points (APs) to select at least one access point (AP) to facilitate wireless communication of a user terminal. The apparatus 800 may include a sensing module 802 and a control module 804. The sensing module 802 may sense the plurality of user terminal-connectible access points. The control module 804 may measure network access speed to transmit and receive data between a user terminal and an external device over a network, with respect to each of the plurality of APs and to select at least one AP of the plurality of user terminal-connectible access points, the at least one AP having a greatest network access speed of the plurality of user terminal-connectible access points.

The control module 804 of the apparatus 800 may include a processor 806 to measure network access speed to transmit and receive data between a user terminal and an external device over a network, with respect to each of the plurality of APs. Further, the control module 804 may select at least one AP of the plurality of user terminal-connectible access points. Accordingly, the AP selected by the control module 804 has a greatest network access speed of the plurality of user terminal-connectible access points.

The exemplary embodiments of the present invention described above may be written as computer programs and implemented in general-use digital computers that execute programs using a computer readable recording medium. In addition, a data structure used in the embodiments of the present invention may be recorded on a computer-readable recording medium in a variety of ways. Examples of the computer-readable recording medium include magnetic storage media (e.g., ROM, floppy disks, hard disks, etc.) and optical recording media (e.g., CD-ROMs, and/or DVDs). That is, the computer-readable recording medium is any data storage device that can store data as a program which can be thereafter read by a computer system. Examples of the computer-readable recording medium include read-only memory (ROM), random-access memory (RAM), CD-ROMs, DVDs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present invention can be easily construed by programmers skilled in the art to which the present invention pertains.

Although a few exemplary embodiments of the present invention have been shown and described, it will be appreciated by those skilled in the art that changes may be made in these exemplary embodiments without departing from the invention, the scope of which is defined in the appended claims.

## Claims

1. A method of selecting at least one access point, AP, to enable a user terminal to wirelessly communicate efficiently, the method comprising:
sensing a plurality of APs connectible to the user terminal;
measuring a network access speed indicating a speed of transmitting and receiving data between the user terminal and an external device over a network with respect to each of the plurality of APs; and
selecting the at least one AP based on the measured network access speed.

2. The method of claim 1, wherein the measuring of the network access speed comprises:
classifying the sensed plurality of APs according to identifiers (IDs) of the sensed plurality of APs;
selecting one of the IDs by a user; and
if multiple APs correspond to the selected ID, measuring the network access speed of each of the APs corresponding to the selected ID.

3. The method of claim 1 or claim 2, wherein the selecting the at least one AP comprises: selecting an AP having a greatest network access speed of the plurality of APs.

4. The method of any one of the preceding claims, wherein the measuring of the network access speed comprises:
transmitting a speed measurement packet to a previously set server by each of the plurality of APs and measuring the network access speed based on a response of the previously set server.

5. The method of any one of claims 1 to 3, wherein the measuring of the network access speed comprises:
providing access to a previously set web page by each of the plurality of APs and measuring the network access speed of each of the plurality of APs.

6. The method of any one of the preceding claims, further comprising:
if an AP having a network access speed greater than a previously set network access speed is sensed from among the plurality of APs, stopping measuring network access speeds of the other APs.

7. The method of claim 1, further comprising:
setting an AP of which network access speed is to be measured first from among the plurality of APs.

8. The method of claim 7, further comprising: storing a Media Access Control (MAC) address of the selected at least one AP,
wherein the setting of the AP comprises: setting a network access speed of an AP corresponding to the stored MAC address to be measured first.

9. The method of claim 7, wherein the setting of the AP comprises:
setting a network access speed of an AP having a greatest signal intensity among intensities of the plurality of APs to be measured first from among the plurality of APs.

10. The method of any one of the preceding claims, wherein the sensing the plurality of APs comprises:
sensing the plurality of APs based on beacons received by the user terminal.

11. An apparatus to select at least one access point, AP, to enable a user terminal to wirelessly communicate efficiently, the apparatus comprising:
a sensing module to sense a plurality of APs connectible to the user terminal;
a speed measuring module to measure a network access speed indicating a speed of transmitting and receiving data between the user terminal and an external device over a network with respect to each of the plurality of APs; and
a control module to select the at least one AP based on the measured network access speed.

12. The apparatus of claim 11, wherein the sensing module classifies the sensed plurality of APs according to IDs of the sensed plurality of APs,
wherein the speed measuring module, if multiple APs correspond to an ID selected by a user, measures the network access speed of each of the APs corresponding to the selected ID.

13. The apparatus of claim 11 or claim 12, wherein the control module selects an AP having a greatest network access speed of the plurality of APs.

14. The apparatus of any one of claims 11 to 13, wherein the speed measuring module transmits a speed measurement packet to a previously set server by each of the plurality of APs and measures the network access speed based on a response of the previously set server.

15. A computer readable recording medium having recorded thereon a computer program to execute the method of selecting at least one AP of any one of claims 1 through 10.
